# EUROPÄISCHE PATENTSCHRIFT

(11) **EP 0 848 099 B1**
(45) Veröffentlichungstag und Bekanntmachung des Hinweises auf die Patenterteilung: **29.10.2003**
(21) Anmeldenummer: 97119926.0
(22) Anmeldetag: 13.11.1997
(51) Int. Cl.: D06F 37/02

(54) **Wäschetrommel für eine Wäschebehandlungsmaschine und Werkzeug zu ihrer Herstellung**
Drum for a laundry treatment machine and tool for its manufacturing
Tambour pour machine à traiter le linge et outil pour sa fabrication

(30) Priorität: 10.12.1996 DE 19651295
(43) Veröffentlichungstag der Anmeldung: 17.06.1998
(73) Patentinhaber: Bosch-Siemens Hausgeräte GmbH, 81669 München (DE)
(72) Erfinder: Nitsche, Alfred, 13351 Berlin (DE)

(56) Entgegenhaltungen:
- DE-U- 1 756 317
- DE-U- 6 606 902
- US-A- 1 505 881
- US-A- 2 438 597

## Beschreibung

Die Erfindung betrifft eine Wäschetrommel für eine Wäschebehandlungsmaschine, bei der Blech-Wandungsteile der Wäschetrommel zum Durchtritt von Behandlungsmedien wie Wasser oder Luft mit Flutlöchern versehen sind, die von Schnittnadeln eines Stanzwerkzeugs geschnitten sind und deren Umgebungsbereiche in Richtung auf die Außenseite der Wäschetrommel tulpen- oder kegelstumpfartig ausgezogen sind, wobei die Lochränder teilweise ringförmig schulterartig geformt sind, und ein Werkzeug aus einer geführten Loch-Schnittnadel und einer mit einem Schneidloch versehenen, unter dem Niveau des eingelegten Blech-Wandungsteils widerstehenden Gegenlage zur Herstellung einer solchen Wäschetrommel.

Eine derartige Wäschetrommel ist aus DE 1 756 317 U und aus DE 66 06 902 U bekannt. Bei der Herstellung der in DE 1 756 317 U dargestellten Wäschetrommel wird offensichtlich zunächst jedes Flutloch ausgestanzt, ehe dessen Tulpe gezogen wird. Dies ist daran erkennbar (DE 1 756 317 U, Fig.1 und 2), daß die Lochränder schräg zur Normalen auf dem Trommelmantel stehen.

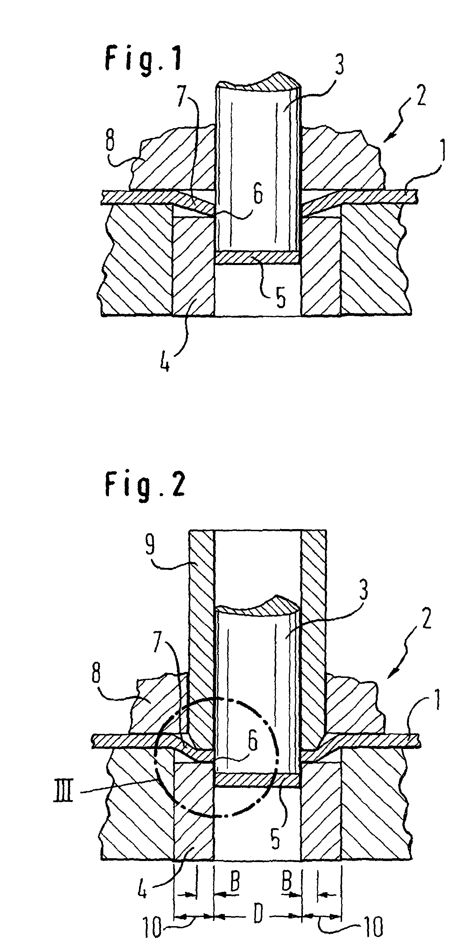

In DE 66 06 902 U ist demgegenüber die Form der Flutlöcher einer Waschmaschinen-Wäschetrommel idealisiert dargestellt. Derartige Flutlöcher werden nämlich heute noch regelmäßig auf eine in Fig. 1 dargestellte Weise hergestellt, bei der das Trommelblech 1 im Stanzwerkzeug 2 von einer abwärts bewegten Schnittnadel 3 je Flutloch zunächst bis auf die Gegenlage 4 gezogen wird, ehe der Lochabschnitt 5 ausgeschnitten wird.

Beim Schneiden durch die abwärts bewegte Schnittnadel 3 entsteht aber ein schräg zur tulpenförmig eingezogenen Blechlage des Trommelbleches 1 stehender Schnitt, durch den an der unteren Kante 6 des Lochrandes ein Grat gezogen wird. Dieser Grat bleibt in Richtung auf die Außenseite der Trommel stehen und bildet in zweierlei Hinsicht eine Gefahr: Zum einen sind die unteren Kanten 6 durch den Grat so scharf, daß bei von der Trommelseite her bedienbaren Waschmaschinen und beim Drehen der Trommel von Hand in die Bedienungslage die Fingerkuppen einer Bedienungsperson aufreißen können. Zum anderen gleiten beim Schleudern Wäscheteile wenigstens soweit durch die Flutlöcher, daß einzelne Fasern sich am Grat anhängen können und beim Abbremsen der Trommel reißen, wenn die Wäscheteile wieder in die Trommel zurückfallen.

Um diesen Nachteil zu vermeiden, wurde durch die gattungsgemäße US 2 438 597 vorgeschlagen, die tulpenartigen Einziehungen der Flutlöcher mit einer ringförmigen Schulter zu versehen, damit die gratbehafteten Schnittkanten der Flutlöcher weiter von der Wäsche entfernt werden. Es hat sich aber gezeigt, dass diese Maßnahme bei weitem nicht den erwünschten Erfolg zeitigt.

Zwar soll ein einfaches Herstellungsverfahren im Prinzip beibehalten werden. Der Erfindung liegt aber die Aufgabe zugrunde, bei einem einfachen Fertigungsverfahren gemäß Fig.1 eine Wäschetrommel der eingangs genannten Art so auszugestalten, daß die Gefahren für die Fingerkuppen und für Wäschefasern, durch Flutlöcher hindurch am äußeren Rand der Löcher festzuhaken, weitestgehend beseitigt ist.

Erfindungsgemäß wird diese Aufgabe dadurch gelöst, dass die Umgebungsbereiche der Lochränder einen etwa doppelt so großen Durchmesser haben wie die Flutlöcher und die Flutlöcher einen um einen Betrag, der ein Bruchteil der Breite der Umgebungsbereiche beträgt, größeren Durchmesser aufweisen als der Durchmesser der sie schneidenden Schnittnadeln des Werkzeugs.

An flach geformten Bereichen, deren Lochränder nach dem Ausstanzen der Löcher auf einer Gegenlage aufgesetzt werden, wird ein bereits gebildeter Grat beim Zurückziehen des Lochrandes auf der Gegenlage ins Lochinnere gestellt und durch die zurücklaufende Schnittnadel leicht nach oben hin verrundet.

Dadurch, dass die Umgebungsbereiche einen etwa doppelt so großen Durchmesser haben wie die Löcher, ist der Kegelstumpf-Winkel in den Umgebungsbereichen groß genug, um einerseits aus dem Erreichbarkeitsbereich für Wäsche weit genug zu entkommen und andererseits wird beim Ziehen der Umgebungsbereiche der Lochrand im Werkzeug weit genug zurückgezogen. Diesem Ziel dient auch eine weitere Ausbildung der erfindungsgemäßen Wäschetrommel, bei der die flach geformten Lochränder eine Breite aufweisen, die einen Bruchteil vom Durchmesser der Löcher beträgt.

In besonders vorteilhafter Weise werden die Forderungen an eine erfindungsgemäße Wäschetrommel durch ein Werkzeug erfüllt, bei dem die Schnittnadel zum Ziehen einer Tulpe oder eines Kegelstumpfes für ein Loch und zum Ausschneiden eines Lochabschnitts in einer Prägehülse geführt ist, dass die Schnittnadel vor dem Aufsetzen auf dem Blech-Wandungsteil die Prägehülse nach unten überragt, und dass die Prägehülse eine abgesetzte Stirnfläche aufweist, deren Durchmesser kleiner ist als der Außendurchmesser der Umgebungsbereiche der Löcher.

Anhand eines in der Zeichnung dargestellten Ausführungsbeispiels ist die Erfindung nachstehend erläutert.

Es zeigen
- Fig. 1: ein Flutloch einer Waschmaschinen-Wäschetrommel im Werkzeug gemäß Stand der Technik
- Fig. 2: eine Ausführungsform eines Flutloches für eine Waschmaschinen-Wäschetrommel gemäß der Erfindung ebenfalls in einem Werkzeug ähnlich Fig.1 und
- Fig. 3: eine vergrößerte Darstellung der Einzelheit III in Fig.2.

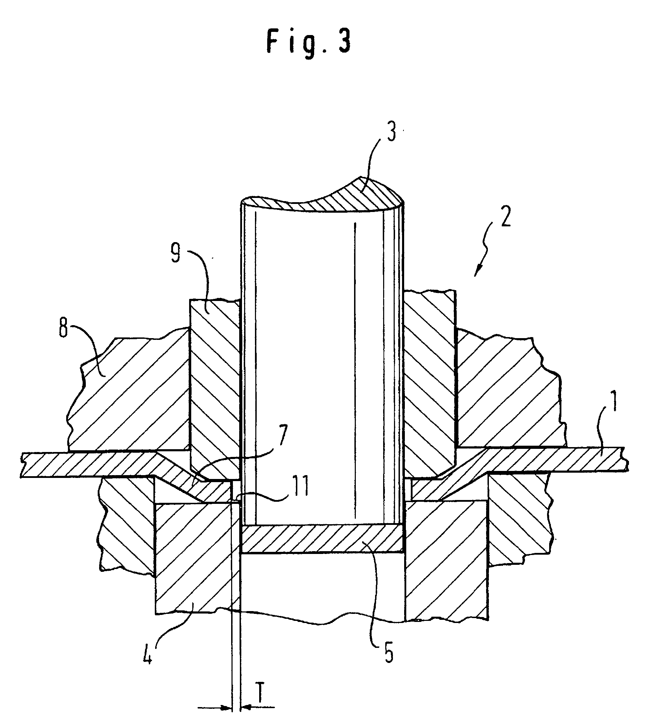

Bei der in Fig. 2 und 3 dargestellten, erfindungsgemäßen flachen Form der Lochränder 7 entsteht an der außenseitigen Kante 6 zwar ebenso ein Grat wie beim Stand der Technik. Er wird aber durch die besondere Ausbildung des Werkzeuges für die Wäsche und für Fingerkuppen ungefährlich gemacht. Dazu wird im Oberteil 8 des Werkzeugs zusätzlich eine Prägehülse 9 angeordnet, die nach der Schnittnadel 3 auf dem Trommelblech 1 aufsetzt. Zunächst zieht die Schnittnadel 3 den Lochrand 7 kegelförmig auswärts, bis das Blech 1 auf der Gegenlage aufsetzt. Dann schneidet die Nadel 3 den Lochabschnitt 5 aus, ehe die Prägehülse 9 den Lochrand 7 bis zur Gegenlage 4 tiefzieht. Dazu weist die Prägehülse 9 eine abgesetzte Stirnfläche auf, deren Durchmesser (D + 2 x B) kleiner ist als der Außendurchmesser (D + 2 x "10") der Umgebungsbereiche 10 der Löcher. Dabei wird die kurze Meridianlinie des Kegelstumpfes gelängt, weil sie durch die abgesetzte Form der Prägehülse 9 tiefer gezogen wird. Damit zieht sich aber die Kante 6 des Lochrandes 7 über eine Strecke T von etwa 0,1 bis 0,2 mm von der Schnittnadel 3 zurück und nimmt ihren Grat 11 mit, der über die Kante der Gegenlage 4 gezogen wird und sich dadurch locheinwärts stellt. Um diese Funktion sicher durchzuführen, haben die Flutlöcher nach dem Prägen der Umgebungsbereiche 10 einen um einen Betrag 2 x T, der ein Bruchteil der Breite B der Umgebungsbereiche beträgt, größeren Durchmesser als der Durchmesser D der sie schneidenden Schnittnadein 3 des Werkzeugs. Sobald sich die Schnittnadel 3 wieder aufwärts bewegt, reibt ihre Außenfläche am Grat 11 entlang und zieht ihn unter Verrundung etwas nach oben, also in Richtung auf das Trommelinnere. Dem Zugriff durch Fingerkuppen wird er dadurch völlig entzogen. Die Verrundung - so wurde gefunden - läßt Wäschefasern, die den Grat 11 jemals erreicht haben, wieder von ihm abgleiten, so daß das Faserreißen nunmehr nahezu ausgeschlossen ist.

In einer Waschmaschinen-Wäschetrommel sind die erfindungsgemäß gestalteten Löcher als Flutlöcher normalerweise im Mantel der Wäschetrommel (nicht dargestellt) angebracht. Sie können zusätzlich auch in einem oder beiden Bodenscheiben der Wäschetrommel angeordnet sein. Demgegenüber können bei einer Wäschetrommel eines Wäschetrockners derartige Löcher beispielsweise ausschließlich in einer Bodenscheibe angeordnet sein, durch die Warmluft in die Wäschetrommel eingeblasen wird.

## Patentansprüche

1. Wäschetrommel für eine Wäschebehandlungsmaschine, bei der Blech-Wandungsteile (1) der Wäschetrommel zum Durchtritt von Behandlungsmedien wie Wasser oder Luft mit Flutlöchern versehen sind, die von Schnittnadeln eines Stanzwerkzeugs geschnitten sind und deren Umgebungsbereiche (10) in Richtung auf die Außenseite der Wäschetrommel tulpen- oder kegelstumpfartig ausgezogen sind, wobei die Lochränder (7) teilweise ringförmig schulterartig geformt sind, **dadurch gekennzeichnet, dass** die Umgebungsbereiche (10) der Lochränder (7) einen etwa doppelt so großen Durchmesser haben wie die Flutlöcher und die Flutlöcher einen um einen Betrag (2 x T), der ein Bruchteil der Breite (B) der Umgebungsbereiche beträgt, größeren Durchmesser aufweisen als der Durchmesser (D) der sie schneidenden Schnittnadeln (3) des Werkzeugs.

2. Wäschetrommel nach Anspruch 1, **dadurch gekennzeichnet, dass** die flach geformten Bereiche der Lochränder (7) eine Breite (B) aufweisen, die einen Bruchteil vom Durchmesser (D) der Löcher beträgt.

3. Werkzeug aus einer geführten Loch-Schnittnadel (3) und einer mit einem Schneidloch versehenen, unter dem Niveau des eingelegten Blech-Wandungsteils (1) widerstehenden Gegenlage (4) zur Herstellung einer Wäschetrommel nach Anspruch 1 oder 2, **dadurch gekennzeichnet, dass** die Schnittnadel (3) zum Ziehen einer Tulpe oder eines Kegelstumpfes für ein Loch und zum Ausschneiden eines Lochabschnitts (5) in einer Prägehülse (9) geführt ist, dass die Schnittnadel (3) vor dem Aufsetzen auf dem Blech-Wandungsteil (1) die Prägehülse (9) nach unten überragt, und dass die Prägehülse (9) eine abgesetzte Stirnfläche aufweist, deren Durchmesser (D + 2 x B) kleiner ist als der Außendurchmesser (D + 2 x "10") der Umgebungsbereiche (10) der Löcher.

## Claims

1. Laundry drum for a laundry treatment machine in which the sheet metal wall parts (1) of the laundry drum are provided with flood holes, which are cut by cutting needles of a punching tool and the surroundings regions (10) of which are drawn out on the outer side of the laundry drum to be tulip-shaped or frusto-conical, for the passage of treatment media such as water or air, wherein the hole edges (7) are formed to be of partly annular shoulder-like shape, **characterised in that** the surrounding regions (10) of the hole edges (7) have approximately twice as large a diameter as the flood holes and the flood holes have a diameter which is greater than the diameter (D) of the cutting needles (3), which cut them, of the tool by an amount (2 x T) which is a fraction of the width (B) of the surrounding regions.

2. Laundry drum according to claim 1, **characterised in that** the flat-formed regions of the hole edges (7) have a width (B) which is a fraction of the diameter (D) of the holes.

3. Tool consisting of a guided hole-cutting needle (3) and a counterbearing (4), which is provided with a cutting hole and opposes below the level of the inserted sheet metal wall part (1), for production of a laundry drum according to claim 1 or 2, **characterised in that** for drawing a tulip or cone frustum for a hole and for cutting out a hole section (5) the cutting needle (3) is guided in a stamping sleeve (9), that the cutting needle (3) protrudes downwardly from the stamping sleeve (9) before placing on the sheet metal wall part (1) and that the stamping sleeve (9) has a recessed end face having a diameter (D + 2 x B) smaller than the external diameter (D + 2 x "10") of the surrounding regions (10) of the holes.

## Revendications

1. Tambour pour machine à traiter le linge, dans lequel des pièces de paroi en tôle (1) du tambour sont pourvues de trous de passage pour le passage des fluides de traitement comme l'air ou l'eau, qui sont découpés par les aiguilles de coupe d'un outil à découper et dont les zones environnantes (10) sont étirées en forme de tulipe ou tronconique sur la face extérieure du tambour, les bords des trous (7) étant formés en partie de forme annulaire en épaulement, **caractérisé en ce que** les zones environnantes (10) des bords des troncs (7) ont un diamètre approximativement deux fois aussi grand que les trous de passage et **en ce que** les trous de passage ont un diamètre plus grand d'un chiffre (2 x T) correspondant à une fraction de la largeur (B) des zones environnantes, que le diamètre (D) des aiguilles de coupe (3) de l'outil les découpant.

2. Tambour selon la revendication 1, **caractérisé en ce que** les zones de forme plate des bords des trous (7) présentent une largeur (B), qui correspond à une fraction du diamètre (D) des trous.

3. Outil constitué d'une aiguille à découper les trous (3) guidée et d'une butée (4) en saillie pourvue d'un trou de coupe sous le niveau de la pièce de paroi en tôle insérée (1) pour la fabrication d'un tambour selon la revendication 1 ou 2, **caractérisé en ce que** l'aiguille de coupe (3) est guidée dans une douille à estamper (9) pour l'emboutissage d'une tulipe ou d'un tronc de cône pour un trou et pour le découpage d'une section de tronc (5), **en ce que** l'aiguille de coupe (3) fait saillie vers le bas avant de se déposer sur la pièce de paroi (1) de la douille d'estampage (9), et **en ce que** la douille d'estampage (9) présente une face avant étagée dont le diamètre (D + 2 x B) est inférieur au diamètre extérieur (D + 2 x "10") des zones environnantes (10) des trous.
